# EUROPÄISCHE PATENTANMELDUNG

(11) **EP 4 570 848 A1**
(43) Veröffentlichungstag der Anmeldung: **18.06.2025**
(21) Anmeldenummer: 24212962.5
(22) Anmeldetag: 14.11.2024
(51) Int. Cl.: C08J 7/04, C08J 7/048, C09D 183/16, C23C 18/14

(54) **TECHNISCHES VERFAHREN ZUR UMSETZUNG DER PHOTOKONVERSION VON MOLEKULAREN PRÄKURSOREN ZU ELEMENTOXIDSCHICHTEN**

(30) Priorität: 08.12.2023 DE 102023134414
(71) Anmelder: Leibniz-Institut für Oberflächenmodifizierung e.V., 04318 Leipzig (DE)
(72) Erfinder: Prager, Lutz, 04157 Leipzig (DE); With, Patrick, 04838 Jesewitz (DE); Helmstedt, Ulrike, 04155 Leipzig (DE); Trimper, Udo, 04288 Leipzig (DE); Heller, Roswitha, 04318 Leipzig (DE)
(74) Vertreter: Gulde & Partner

(57) **Zusammenfassung**

Die Erfindung betrifft ein Verfahren zur Herstellung einer Einzelbarriereschicht auf einem flexiblen polymeren Substrat. Das Verfahren umfasst die folgenden unter einer Inertgasatmosphäre durchzuführenden Schritte: Bereitstellen eines flexiblen polymeren Substrats; Beschichten des flexiblen polymeren Substrats mit einem Beschichtungsmittel bestehend aus einem Lösemittel und einem VUV-härtbaren Beschichtungsmaterial; Entfernen des Lösemittels; Einstellen eines Sauerstoffgehalts von 1·10⁻⁴ bis 2 Volumenprozent in einer Sauerstoff-Inertgasatmosphäre und Bestrahlen des VUV-härtbaren Beschichtungsmaterials mit Vakuum-Ultraviolett-Strahlung der Wellenlänge von 100 nm bis 250 nm unter der Sauerstoff-Inertgasatmosphäre zur Aushärtung einer Oxidschicht auf dem flexiblen polymeren Substrat.

## Beschreibung

Die Erfindung betrifft ein Verfahren zur Herstellung einer Einzelbarriereschicht auf einem flexiblen polymeren Substrat.

### Technologischer Hintergrund

Gaspermeationsbarriereschichten zeichnen sich durch eine äußerst geringe Wasserdampfdurchlässigkeit aus, welche sich in niedrigen WVTR-Werten widerspiegelt und maßgeblich durch die Anzahl und Qualität der Einzelbarriereschichten bestehend aus (amorphen) Elementoxidschichten beeinflusst wird. Hochbarriereschichtverbünde können derzeit nur durch die Laminierung mehrerer, d.h. durch i.d.R. mehr als vier Einzelbarriereschichten hergestellt werden. Hochbarriereschichtverbünde bezeichnen hier Folienlaminate mit WVTR-Werten ≤ 10⁻⁴ g m⁻² d⁻¹. Verfahren zur Herstellung von Einzelbarriereschichten bestehen in der Beschichtung von Substraten mittels kostenintensiver vakuumbasierter Sputterverfahren, bzw. plasmagestützter chemischer GasphasenAbscheidung von Metalloxiden (z.B. SiOₓ, AlₓO_{y} und ZnₓSn_{y}O_{z}), Beschichtung aus Sol-Gel-Hybridschichten (ORMOCERe^{®}), oder Beschichtung mittels Vakuum-UV-Konversion von Perhydropolysilazan (PHPS).

Es bestehen jedoch noch Probleme bei der technischen Umsetzung der Beschichtung von Einzelbarriereschichten auf flexiblen Substraten. So führen verfahrensbedingte Defekte in den Einzelbarriereschichten, z.B. durch die intermediäre Entstehung von OH-Gruppen in der Schicht, zu hohen WVTR-Werten ≥ 0,1 g m⁻² d⁻¹. Für die Verwendung im Hochbarriere-Schichtverbund, welcher WVTR-Werte deutlich unter diesem Wert bedingt, ergibt sich hieraus die Notwendigkeit die Anzahl der laminierten Einzelbarriereschichten zu erhöhen (i.d.R. vier oder mehr Schichten). Die hieraus resultierende vergrößerte Gesamtschichtdicke des Verbunds führt allerdings zur Erhöhung von Biegeradien, Transmissionsverlusten und Herstellungskosten sowie zu einer Verringerung der Langzeitstabilität. Für die Verwendung z.B. als Beschichtungsmaterial von flexiblen optoelektronischen Bauteilen (z.B. Sensoren, Laser- und Leuchtdioden, Fotowiderständen, Photodioden, Solarzellen und Fototransistoren) besteht demnach ein anhaltender Bedarf an einem Hochbarriere-Schichtverbund mit möglichst geringer Wasserdampfdurchlässigkeit und möglichst hoher Biegsamkeit.

### Zusammenfassung der Erfindung

Die Aufgabe der Erfindung wird gelöst und die Nachteile des Standes der Technik werden, zumindest teilweise, durch das vorliegende Verfahren zur Herstellung von Einzelbarriereschichten gemäß den beigefügten Ansprüchen überwunden. Die abhängigen Ansprüche sind auf bevorzugte Ausführungsformen der vorliegenden Offenbarung gerichtet.

Die Erfindung betrifft ein technisches Verfahren zur Herstellung einer Einzelbarriereschicht auf einem flexiblen polymeren Substrat, wobei das Verfahren die folgenden unter einer Inertgasatmosphäre, vorzugsweise unter Stickstoffatmosphäre, durchzuführenden Schritte umfasst:
- Bereitstellen eines flexiblen polymeren Substrats;
- Beschichten des flexiblen polymeren Substrats mit einem Beschichtungsmittel bestehend aus einem Lösemittel und einem VUV-härtbaren Beschichtungsmaterial;
- Entfernen des Lösemittels;
- Einstellen einer Sauerstoff-Inertgasatmosphäre mit einer Sauerstoffkonzentration von 1·10⁻⁴ bis 2.0 Volumenprozent; und
- Bestrahlen des VUV-härtbaren Beschichtungsmaterials mit VUV-Strahlung der Wellenlänge von 100 nm bis 250 nm in der Sauerstoff-Inertgasatmosphäre zur Aushärtung einer Oxidschicht auf dem flexiblen polymeren Substrat.

Die Konzentration des Sauerstoffs im Gemisch mit dem Inertgas in der Sauerstoff-Inertgasatmosphäre ist so gewählt, dass der Sauerstoff die Strahlung teilweise absorbiert, sodass der Aushärtungsprozess verlangsamt wird und Defekte in der Einzelschicht vermieden werden. Unter diesen Bedingungen kann die Photokonversion so langsam durchgeführt werden, dass sowohl das Eindiffundieren von Sauerstoff als Reaktand der photochemischen Umsetzung möglich wird, als auch das Herausdiffundieren von Reaktionsprodukten, wie z.B. Ammoniak, erfolgen kann. Infolge dessen wird langsam eine Oxidschicht mit einer Schichtdicke von kleiner 300 nm gebildet, die höchste Wasserdampftransmissionsbarrierewerte von WVTRs ≤ 10⁻² g m⁻² d⁻¹ erzielt und so im Zweischichtlaminat WVTRs ≤ 10⁻⁴ g m⁻² d⁻¹ möglich macht.

Die Sauerstoffkonzentration in der Sauerstoff-Inertgasatmosphäre beträgt 1·10⁻⁴ bis 2.0 Volumenprozent bezogen auf 100 Volumenprozent des Gasgemischs aus Sauerstoff und Inertgas. Vorzugsweise kann die Sauerstoffkonzentration 0.1 bis 1.8, besonders bevorzugt 1.0 bis 1.5 Volumenprozent betragen.

Das Bestrahlen des VUV-härtbaren Beschichtungsmaterials erfolgt mit VUV-Strahlung der Wellenlänge von 100 nm bis 250 nm in der Sauerstoff-Inertgasatmosphäre. Vorzugsweise kann mit Wellenlängen von 150 nm bis 200 nm bestrahlt werden.

Die Bestrahlung des VUV-härtbaren Beschichtungsmaterials kann vorzugsweise über einen Zeitraum von 10 bis 200 Sekunden erfolgen.

Vorzugsweise erfolgt der Bestrahlungsschritt bei Atmosphärendruck.

Das VUV-härtbare Beschichtungsmaterial besteht aus einem chemischen Stoff, der eine oder mehrere chemische Bindungen zwischen einem Element der Gruppen 1-14 und einem organisch-chemischen Rest umfasst, und der durch VUV-Strahlung aushärtbar ist. Das VUV-härtbare Beschichtungsmaterial kann vorzugsweise ein Polysilazan, ein Polysiloxan oder ein Übergangsmetall Alkoholat sein. Das Polysilazan kann beispielsweise eine Perhydropolysilazan, das Polysiloxan beispielsweise Polydimethylsiloxan sein; das Übergangsmetall Alkoholat ist vorzugsweise ausgewählt aus Tri-*tert-*butanoato-Eisen(III) (Eisen(III) tert-butoxid) und Tetraethanoato-Titan (IV) (Orthotitansäuretetraethylester).

Das Lösemittel kann aus der Gruppe der organisch-chemischen Lösemittel ausgewählt sein. Das Lösemittel kann vorzugsweise aus der Gruppe umfassend Dibutylether, Xylol und Methyltertbutylether (MTBE) ausgewählt sein.

Die Konzentration des VUV-härtbaren Beschichtungsmaterials im Lösemittel beträgt vorzugsweise < 10 Ma%.

Ferner kann das Entfernen des Lösemittels ein Führen des beschichteten flexiblen polymeren Substrats über eine Blaswalze oder einen temperierten Auftragszylinder umfassen. Das Führen des flexiblen polymeren Substrates kann aufliegende und/oder hängende Prozesse umfassen. Alternativ zu den vorstehenden Methoden oder zusätzlich kann das Entfernen des Lösemittels durch Bestrahlung mit IR-Licht und/oder durch eine thermische Trocknung im Heißlufttrockenkanal erfolgen. Vorzugsweise kann das Entfernen des Lösemittels eine Bestrahlung mit IR-Licht und/oder eine thermische Trocknung umfassen. Die thermische Trocknung kann beispielsweise im Heißlufttrockenkanal erfolgen.

Vorzugsweise erfolgt das Entfernen des Lösemittels durch Führung über einen temperierten Auftragszylinder, eine anschließende thermische Trocknung im Heißlufttrockenkanal, und/oder gefolgt von Bestrahlung mit IR-Licht. Das Entfernen des Lösemittels vor dem Aushärten des VUV-härtbarem Materials hat den Vorteil, dass die Bildung von Schichtinhomogenitäten verhindert wird, die durch elektrostatische Aufladung erzeugt werden.

In bevorzugter Ausführungsform kann das Bereitstellen des flexiblen polymeren Substrates eine Befreiung des flexiblen polymeren Substrates von elektrostatischer Aufladung und aufliegenden Partikeln umfassen.

Das flexible polymere Substrat ist vorzugsweise frei von topologischen Oberflächendefekten mit Aspektverhältnissen 0.5 bis 10, besonders bevorzugt > 2, weiterhin bevorzugt > 2 bis 10.

Bevorzugt kann das Beschichtungsmittel mittels einer pulsationsarmen Pumpe, vorzugsweise einer Schlauchpumpe für den Beschichtungsschritt bereitgestellt werden.

Vorzugsweise wird im Beschichtungsschritt das Beschichtungsmittel mittels Tauch-, Düsen-, Druck- oder Antragsverfahren, vorzugsweise mittels Schlitzdüsenauftrag auf das flexible polymere Substrat aufgetragen. Mit anderen Worten erfolgt das Ablegen des Flüssigkeitsfilmes aus Beschichtungsmittel auf dem flexiblen polymeren Substrat mittels Tauch-, Düsen-, Druck- oder Antragsverfahren, vorzugsweise mittels Schlitzdüsenauftrag.

Vorzugsweise ist das Inertgas der Sauerstoff-Inertgasatmosphäre aus der Gruppe umfassend: Stickstoff, Helium und Argon ausgewählt. Besonders bevorzugt ist das Inertgas Stickstoff. Die Sauerstoff-Inertgasatmosphäre kann bevorzugt mit Filtern von Verunreinigungen (z.B. Maschinenöl), vorgereinigt werden.

Das bereitgestellte flexible polymere Substrat kann eine Folie, ein Papier, eine Membran oder ein Textil sein.

### Kurzbeschreibung der Figuren

Die Erfindung wird nachfolgend anhand eines Ausführungsbeispiels und dazugehöriger Zeichnungen näher erläutert. Die Figur zeigt:

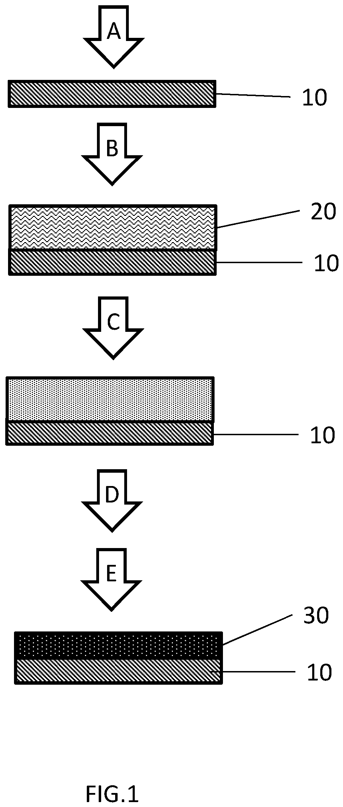

- Fig. 1: Schematische Darstellung des erfindungsgemäßen Verfahrens.

### Detaillierte Beschreibung der Erfindung

In einem Ausführungsbeispiel erfolgt das erfindungsgemäße Verfahren in Form einer kontinuierlichen Prozessführung in einem Rolle-zu-Rolle Verfahren unter Verwendung von Vakuum-Ultraviolett-Strahlung (VUV-Strahlung) zur Aushärtung eines VUV-härtbaren Beschichtungsmaterials und somit der Bildung einer Oxidschicht aus diesem.

Das Verfahren wird vorzugsweise unter Reinraumbedingungen durchgeführt. Reinraumbedingungen umfassen eine konstante Umgebungstemperatur im Bereich von 10 °C bis 40 °C, eine konstante relative Luftfeuchtigkeit kleiner 45 % r.h. und eine Luftqualität nach Reinraumklasse ISO3 oder höher nach DIN EN ISO 14644-1. Die Lösung kann ferner unter inerten Bedingungen gelagert werden, um die Hydrolyse des VUV-härtbaren Beschichtungsmaterials zu vermeiden.

Das zu beschichtende flexible polymere Substrat 10 kann vor der Bereitstellung in Schritt A mittels geeigneter technischer Maßnahmen von Partikeln befreit werden, beispielsweise durch eine Koronabehandlung oder durch Reinigung mittels Ionisationsstäben.

Vorzugsweise kann beim Beschichten des Substrats 10 eine zusätzliche Reinigung der Inertgasatmosphäre von Partikeln mittels mehrstufiger Filtration (z.B. durch Mittel mit Filterstufe Filterklasse H14 oder besser) erfolgen, um die Wahrscheinlichkeit der Bildung von Defekten durch Einschluss in die Beschichtung zusätzlich zu verringern.

Die Bereitstellung des Substrats in Schritt A und die Beschichtung in Schritt B werden unter einer Inertgasatmosphäre, vorzugsweise unter einer Stickstoffatmosphäre durchgeführt. Die Bestrahlung in Schritt E wird in einer Sauerstoff-Inergasatmosphäre mit einem Sauerstoffgehalt 1·10⁻⁴ bis 2.0 Volumenprozent durchgeführt, die zuvor in Schritt D eingestellt wurde.

Die Lösung wird vorzugsweise mit einer Spritzen-, Zahnrad- oder Schlauchpumpe zum Auftragssystem gefördert, um die Bildung von Gasblasen im Film zu minimieren. Für den Schichtauftrag der Lösung in Schritt B können Tauch-, Sprüh-, Antrags- oder Schlitzdüsenbeschichtungsverfahren angewandt werden.

Nach der Beschichtung in Schritt B wird das Lösemittel aus der aufgetragenen Schicht 20 der Lösung in Schritt C entfernt. Dies hat den vorteilhaften Effekt, dass die Bildung von Schichtinhomogenitäten, die durch elektrostatische Aufladung erzeugt werden, verhindert werden.

Das Entfernen kann zum einen durch Ablösen der Folie vom Auftragszylinder oder mit Hilfe einer Blaswalze erfolgen. Eine Blaswalze ist eine Walze, die den direkten Kontakt der Beschichtung mit der Leitwalzenoberfläche durch Erzeugen eines definierten Luftkissens vermeidet. Dies hat den zusätzlichen Vorteil, dass gleichzeitig mechanische Schäden an der Rückseite (d.h. der unbeschichteten Seite) des Substrats vermieden werden, wodurch wiederum eine Partikelbildung und somit potentielle Beschädigungen der empfindlichen Oxidschicht 30 (auch Barriereschicht oder Einzelbarriereschicht) vermieden werden.

Das Entfernen kann zum anderen durch Führung des beschichteten Substrats über einen doppelwandigen temperierbaren Auftragszylinder erfolgen. Dabei können die Temperatur des Zylinders und die Position des Auftragswerkes so eingestellt sein, dass ein gleichmäßiger Schichtauftrag und ein ausreichendes Entfernen (Austreiben, Verdampfen) des Lösemittels erzielt werden.

In bevorzugter Ausführungsform ist für das Entfernen des Lösemittels in Schritt C vor der Einstellung der Sauerstoff-Inergasamosphäre in Schritt D und der Bestrahlung in Schritt E, eine zweistufige Trockenstrecke vorgesehen, die aus einem Durchgang durch einen Heißlufttrockenkanal (Luft partikelgereinigt) mit anschließender IR-Trocknung besteht.

Das Bestrahlen und Aushärten des VUV-härtbaren Materials in Schritt E erfolgt dann unter der Sauerstoff-Inertgasatmosphäre mit einem Sauerstoffgehalt von 1·10⁻⁴ bis 2.0 Volumenprozent und durch Bestrahlung mit VUV-Strahlung der Wellenlänge von 100 nm bis 250 nm, vorzugsweise mit Wellenlängen < 200 nm, zur Aushärtung und Ausbildung der Oxidschicht 30 auf dem Substrat 10. Die Konzentration des Sauerstoffs im Gemisch mit dem Inertgas ist derart gewählt, dass der Sauerstoff die Strahlung teilweise adsorbiert. Dies hat den vorteilhaften Effekt, dass durch die teilweise Absorption der Strahlung eine zu schnelle Aushärtung und damit einhergehend die Bildung schädigender Partikel in der Schicht (Defektstellen) vermieden werden.

Im Folgenden kann dann eine weitere Einzelbarriereschicht auf das mit der ersten Oxidschicht beschichtete flexible polymere Substrat in gleicher Weise aufgebracht werden. Das mit der Oxidschicht beschichtete flexible polymere Substrat kann ferner auch auf ein zweites mit einer Oxidschicht beschichtetes flexibles polymeres Substrat (der gleichen Art) und/oder einen andersartigen polymeren Film laminiert werden, so dass ein transparentes und flexibles Folienlaminat entsteht.

## Patentansprüche

1. Verfahren zur Herstellung einer Einzelbarriereschicht auf einem flexiblen polymeren Substrat, wobei das Verfahren die folgenden unter einer Inertgasatmosphäre durchzuführenden Schritte umfasst:
- Bereitstellen eines flexiblen polymeren Substrats (10);
- Beschichten des flexiblen polymeren Substrats (10) mit einem Beschichtungsmittel bestehend aus einem Lösemittel und einem VUV-härtbaren Beschichtungsmaterial;
- Entfernen des Lösemittels;
- Einstellen einer Sauerstoff-Inertgasatmosphäre mit einer Sauerstoffkonzentration von 1·10⁻⁴ bis 2.0 Volumenprozent; und
- Bestrahlen des VUV-härtbaren Beschichtungsmaterials mit VUV-Strahlung der Wellenlänge von 100 nm bis 250 nm in der Sauerstoff-Inertgasatmosphäre zur Aushärtung einer Oxidschicht (30) auf dem flexiblen polymeren Substrat (10).

2. Verfahren nach Anspruch 1, wobei das VUV-härtbare Beschichtungsmaterial aus einem chemischen Stoff besteht, der eine oder mehrere chemische Bindungen zwischen einem Element der Gruppen 1-14 und einem organischen Rest umfasst, und der durch VUV-Strahlung aushärtbar ist.

3. Verfahren nach Anspruch 1 oder 2, wobei die Bestrahlung des VUV-härtbaren Beschichtungsmaterials über einen Zeitraum von 10 bis 200 Sekunden erfolgt.

4. Verfahren nach einem der vorstehenden Ansprüche, wobei das Entfernen des Lösemittels eine Bestrahlung mit IR-Licht und/oder eine thermische Trocknung umfasst.

5. Verfahren nach einem der vorstehenden Ansprüche, wobei das Entfernen des Lösemittels ein Führen des beschichteten flexiblen polymeren Substrats über eine Blaswalze oder einen temperierten Auftragszylinder umfasst.

6. Verfahren nach einem der vorstehenden Ansprüche, wobei das Bereitstellen des flexiblen polymeren Substrates (10) dessen Befreiung von elektrostatischer Aufladung und aufliegenden Partikeln umfasst.

7. Verfahren nach einem der vorstehenden Ansprüche, wobei das flexible polymere Substrat (10) frei von topologischen Oberflächendefekten mit Aspektverhältnissen 0.5 bis 10 ist.

8. Verfahren nach einem der vorstehenden Ansprüche, wobei das Beschichtungsmittel mittels einer pulsationsarmen Pumpe für den Beschichtungsschritt bereitgestellt wird.

9. Verfahren nach einem der vorstehenden Ansprüche, wobei im Beschichtungsschritt das Beschichtungsmittel mittels Düsen- oder Druck- oder Antragsverfahren, vorzugsweise mittels Schlitzdüsenauftrag, auf das flexible polymere Substrat aufgetragen wird.

10. Verfahren nach einem der vorstehenden Ansprüche, wobei das Inertgas der Sauerstoff-Inertgasatmosphäre aus der Gruppe umfassend: Stickstoff, Helium und Argon ausgewählt ist.
